# EUROPÄISCHE PATENTSCHRIFT

(11) **EP 0 529 316 B1**
(45) Veröffentlichungstag und Bekanntmachung des Hinweises auf die Patenterteilung: **15.10.1997**
(21) Anmeldenummer: 92112743.7
(22) Anmeldetag: 25.07.1992
(51) Int. Cl.: G05D 23/19, G08C 25/02, H04L 1/14, G08C 23/00, H04B 10/10

(54) **Einrichtung zur Regelung der Raumtemperatur**
Room temperature control device
Dispositif de contrôle de la température d'un local

(30) Priorität: 31.07.1991 AT 1520/91
(43) Veröffentlichungstag der Anmeldung: 03.03.1993
(73) Patentinhaber: Joh. Vaillant GmbH u. Co., 42810 Remscheid (DE); n.v. Vaillant s.a., 1620 Drogenbos (BE); VAILLANT S.A.R.L, 94045 Créteil Cedex (FR); VAILLANT Ges.m.b.H, 1231 Wien (AT); Vaillant Ltd., Rochester Kent ME2 4EZ (GB); Vaillant B.V., 1100 DT Amsterdam (NL); Vaillant GmbH, 8953 Dietikon 1 (CH)
(72) Erfinder: Taag, Jürgen, W-5630 Remscheid (DE); Wolff, Markus, W-5000 Köln 60 (DE)
(74) Vertreter: Heim, Johann-Ludwig, Dipl.-Ing.

(56) Entgegenhaltungen:
- DE-A- 3 932 626
- GB-A- 2 051 421
- GB-A- 2 175 724
- GB-A- 2 180 963
- GB-A- 2 206 422
- US-A- 4 585 164

## Beschreibung

Die Erfindung bezieht sich auf eine Einrichtung zur Regelung der Raumtemperatur gemäß dem Oberbegriff des Anspruchs 1 sowie auf ein Verfahren zu deren Verwendung gemäß dem Oberbegriff des Anspruchs 16.

Eine solche Regleinrichtung ist aus der DE-PS 33 08 099 bekanntgeworden. Bei dieser bekannten Lösung ist der Temperaturfühler mit einem Komparator verbunden, dessen zweiter Eingang mit einem Soll-Wert-Geber verbunden ist. Der Ausgang dieses Komparators ist mit einer einen Taktgeber aufweisenden Modulierstufe verbunden, die den Sender steuert. Dabei werden in regelmäßigen zeitlichen Abständen dem Ausgangssignal des Komparators entsprechende Signale vom Sender abgegeben. Das Puls/Pausen-Verhältnis liegt dabei in der Größenordnung von 0,1 bis 1 s/0,1 bis 1 min. Nachteilig ist neben dem hohen Energieverbrauch vor allem die erhebliche Unsicherheit hinsichtlich der Funktionsfähigkeit der Regeleinrichtung.

Eine computerisierte Regeleinrichtung mit einem Sender zur drahtlosen Übertragung eines Signals zu einem Heiz- oder Kühlgerät ist aus der GB-OS 21 80 963 bekannt. Dabei treten ebenfalls die oben geschilderten Nachteile auf.

Aus der DE-OS 39 32 626 ist eine Fernsteuereinrichtung für ein Hauptgerät bekannt, wobei zur Verbesserung der Funktionsfähigkeit sowohl in der Fernsteuereinrichtung als auch im Hauptgerät Sende- und Empfangseinheit vorgesehen sind. Dadurch ist eine Kontrolle und Anzeige des von der Fernsteuereinrichtung abgesandten und vom Hauptgerät empfangenen Signals möglich.

Eine ähnliche Einrichtung mit bilateraler Signalübertragung zwischen einem mobilen Steuergerät und einem zu steuernden Gerät ,insbesondere einem Personalcomputer, ist aus der GB-OS 21 75 724 bekannt.

Der Erfindung liegt die Aufgabe zugrunde, eine Regeleinrichtung der eingangs erwähnten Art vorzuschlagen, die sich durch geringeren Energiebedarf und verbesserte hohe Funktionssicherheit, insbesondere auch bei Ausfall des mobilen Raumptemperaturreglers auszeichnet.

Erfindungsgemäß wird die Aufgabe durch die kennzeichnenden Merkmale des Anspruchs 1 gelöst. Durch die Anordnung eines zusätzlichen Sender-/Empfänger-Paares ist die Rücksendung des Telegramms vom Wandgerät zum Raumtemperaturregler möglich, so daß im Raumtemperaturregler ein Vergleich des ausgesandten mit dem empfangenen Telegramm erfolgen kann und somit eine Verbesserung der Übertragungssicherheit erreicht wird. Eine Funktionsstörung innerhalb der Übertragungsstrecke liegt vor, wenn das ausgesandte und das empfangene Telegramm nicht identisch sind. In diesem Fall wird der Regler des Wandgerätes aktiviert. Diese Not-Temperaturregelung übernimmt die Regelung, wenn beispielsweise innerhalb eines bestimmten Zeit fensters kein Telegramm empfangen wurde oder das empfangene Telegramm aufgrund der Überprüfung mittels der "Feedback"-Auswertung als nicht konstant ermittelt wurde. Dieser zusätzliche Regler im fest installierten Wandgerät bietet aufgrund seiner Watchdog-Funktion ein Höchstmaß an Sicherheit, insbesondere auch dann, wenn der mobile Raumtemperaturregler ungünstig positioniert ist, wodurch beispielsweise die Signalübertragungsstrecke unterbrochen wurde. Eine getaktete Signalabgabe ist nicht vorgesehen. Dadurch erfolgt eine Telegrammgenerierung, das heißt, die Erzeugung und Abgabe eines Sendesignals nur, wenn das Ausgangssignal des Komparators einen Schwellwert übersteigt. Das wiederum ist nur dann der Fall, wenn der Raumtemperatur-Ist-Wert um einen Mindestbetrag vom Raumtemperatur-Soll-Wert abweicht. Nur dann ist eine Schaltzustandsänderung erforderlich. Der zeitliche Abstand zweier aufeinanderfolgender Telegrammgenerierungen kann folglich sehr groß sein, so daß ein sehr geringer Stromverbrauch möglich ist.

Vorzugsweise weist der Raumtemperaturregler eine dem Empfänger und der Telegrammgenerierung nachgeschaltete Telegrammauswertung zur Feststellung der Übereinstimmung zwischen generiertem und empfangenem Telegramm auf. Dieser kann eine akustische Fühlersignalisierung oder eine optische Anzeige, insbesondere ein LCD-Display nachgeschaltet sein. Auf diese Weise ist für den Benutzer nachvollziehbar, welche Reglereinrichtung - die im Raumtemperaturregler oder die im Wandgerät - in Betrieb ist, das heißt, in welchem Raumbereich die Ist-Temperatur-Erfassung erfolgt. Da der Raumtemperaturregler mobil ist und folglich in jedem zu temperierenden Raumbereich positionierbar ist, so daß die Ist-Temperatur gerade an diesem momentan interessierenden Ort erfaßt wird, soll der mobile Raumtemperaturregler möglichst ständig benutzt werden, wogegen der Regler im Wandgerät nur als Ersatzregler bei Ausfall des ersteren dient.

Gemäß einer vorteilhaften Weiterbildung der Erfindung ist vorgesehen, daß der Sender des Wandgerätes mit einer Telegrammgenerierung zur Übertragung externer Daten zum Raumtemperaturregler verbunden ist. Diese Möglichkeit zur Erhöhung des Bedienungskomforts ergibt sich nur durch das Vorhandensein einer Rückübertragungsstrecke. Diese kann neben der Feedback-Übermittlung vom Wandgerät zum Raumtemperaturregler zusätzlich der Übertragung von Informationen aus der Heizungseinrichtung (Schaltzustand, Störfall, Betriebsstunden oder ähnliches) dienen. Die übermittelten externen Daten können gegebenenfalls über ein Display am Raumtemperaturregler zur Anzeige gebracht werden. Bei dieser Generierung wird der Sendeinformation ein verschlüsselter Code zugeordnet, der von dem Empfänger des Raumtemperaturreglers entschlüsselt und zur Weiterverarbeitung aufbereitet wird.

Dem Empfänger des Wandgerätes ist vorzugsweise eine Telegrammauswertung nachgeschaltet, welche mit dem Sender des Wandgerätes verbunden ist und eine Zeitverzögerungsstufe aufweist, an welcher die Stelleinrichtung anschließt. Diese Zeitverzögerungsstufe ist erforderlich, um die Weiterleitung des ausgewerteten Telegramms an die Stelleinrichtung zu unterdrücken, bis ein einwandfreies und feedback-überprüftes Telegramm eintrifft.

Die Stelleinrichtung kann sowohl Zweipunktcharakteristik, insbesondere als Relaisschaltung, als auch Quasi-Stetigcharakteristik aufweisen, wobei im letzteren Fall n Schaltstellungen mit n ≥ 3 vorgesehen sind.

Sender und Empfänger sind bevorzugt als Infrarot-Sender und -Empfänger ausgebildet. Denkbar wäre aber auch ein Hochfrequenzsystem beziehungsweise Funksystem; dieses wäre zwar weniger störanfällig, bedarf jedoch der Zulassung durch die fernmeldetechnischen Stellen der Bundespost.

Um die Mobilität des Raumtemperaturreglers nicht zu beeinträchtigen, ist dieser vorteilhafterweise batteriebetrieben oder akkumulatorbetrieben ausgebildet, wobei zur Aufladung der Akkumulatoren über Steckkontakte am Wandgerät eine Netzverbindung vorgesehen ist. Wie oben beschrieben, werden die Batterien beziehungsweise Akkumulatoren geschont, indem eine Telegrammgenerierung nur bei tatsächlich erforderlicher Schaltzustandsänderung erfolgt. Dieser Effekt wird noch wesentlich verstärkt, indem weiter vorgesehen ist, daß der Raumtemperaturregler eine Zeitplansteuerung für den gewünschten Temperaturverlauf aufweist, welche zur Einleitung und Beendigung von Sendepausen, beispielsweise während der Nachtabsenkphase, über einen Signalpfad mit der Telegrammgenerierung verbunden ist. Das bedeutet, daß während der gesamten Nachtabsenkung beziehungsweise während eines längeren Zeitraumes, in dem keine Schaltzustandsänderung stattfindet, auch kein Telegramm vom Raumtemperaturregler zum Wandgerät übertragen wird, wodurch die entsprechende Sendeenergie eingespart wird.

Während des normalen Betriebes ist sicherheitshalber vorgesehen, daß die Telegrammgenerierung des Raumtemperaturreglers eine zeitsynchrone Zähleinrichtung (Zeitfenster, Defaultzeit) aufweist, die bei jeder Telegrammgenerierung aktiviert wird und nach einem bestimmten, zum Beispiel 30 Minuten entsprechenden, Zählstand eine gleichartige Telegrammgenerierung auslöst. Beim Zweipunktregler zur Steuerung eines Heizgerätes ist zu erwarten, daß die Schaltfrequenz zwischen 15 und 30 Minuten liegt, so daß das Zeitfenster im allgemeinen nur während der Aufheizzeit zum Ende der Nachtabsenkphase und während der Abkühlzeit zu Beginn der Nachtabsenkphase ausgenutzt wird. Von besonderer Bedeutung ist die Defaultzeit bei Stetigregelung beziehungsweise Quasi-Stetigregelung, da hier auch während des normalen Tag-Betriebes lange Zeiträume mit gleichbleibender Teillastanforderung auftreten können. Die erneute Telegrammgenerierung nach einem maximalen Zeitraum, beispielsweise 30 Minuten, ist erforderlich, um nicht die Not-Temperaturregelung, das heißt die Watchdog-Funktion des Wandgerätes auszulösen, da die Entscheidungsstufe zur Erkennung von Signalübertragungsfehlern nicht unterscheiden kann, ob das Ausbleiben eines Telegramms auf eine gestörte Signalübertragungsstrecke oder auf das Fehlen eines Schaltzustands-Änderungsbefehles zurückzuführen ist.

Des weiteren sind bevorzugt Mittel vorgesehen, die die Zähleinrichtung zur Einleitung beziehungsweise Beendigung einer Sendepause über den Signalpfad aus- beziehungsweise einschalten. Um auch in diesem Fall die Einschaltung der Not-Temperaturregelung zu verhindern, wird bei Beginn einer Sendepause gleichzeitig ein entsprechend kodiertes Telegramm generiert, welches vom Empfänger des Wandgerätes entschlüsselt werden kann und letztlich bewirkt, daß auch die Not-Temperaturregelung für die Dauer dieser Sendepause außer Kraft gesetzt wird.

Nach einem Verfahren zur Verwendung der Regeleinrichtung ist vorgesehen, daß die Telegrammgenerierung nur aktiviert wird, wenn eine Mindestdifferenz zwischen Soll- und Ist-Temperatur überschritten wird oder wenn während eines festen Zeitraumes (Zeitfenster, Defaultzeit), zum Beispiel 30 Minuten, keine Überschreitung der Mindestdifferenz aufgetreten ist. Im letzten Fall wird das aktuelle Sendetelegramm noch einmal generiert. Die diskrete Sendetelegrammgenerierung hat vor allem den Vorteil eines sehr geringen Energiebedarfs.

Vorteilhafte Weiterbildungen der Erfindung sind in den Unteransprüchen gekennzeichnet beziehungsweise werden nachstehend anhand der Zeichnungsfiguren näher erläutert.

Es zeigen:
Figur 1 eine schematische Darstellung einer Ausführungsvariante einer Regeleinrichtung,
Figur 2 einen Raumtemperaturregler als Bestandteil der Regeleinrichtung gemäß Figur 1 in schematisch/perspektivischer Darstellung,
Figur 3 ein Blockschaltbild einer ersten Ausführung einer Regeleinrichtung gemäß Figur 1 und
Figur 4 ein Blockschaltbild einer zweiten Ausführung einer Regeleinrichtung gemäß Figur 1.

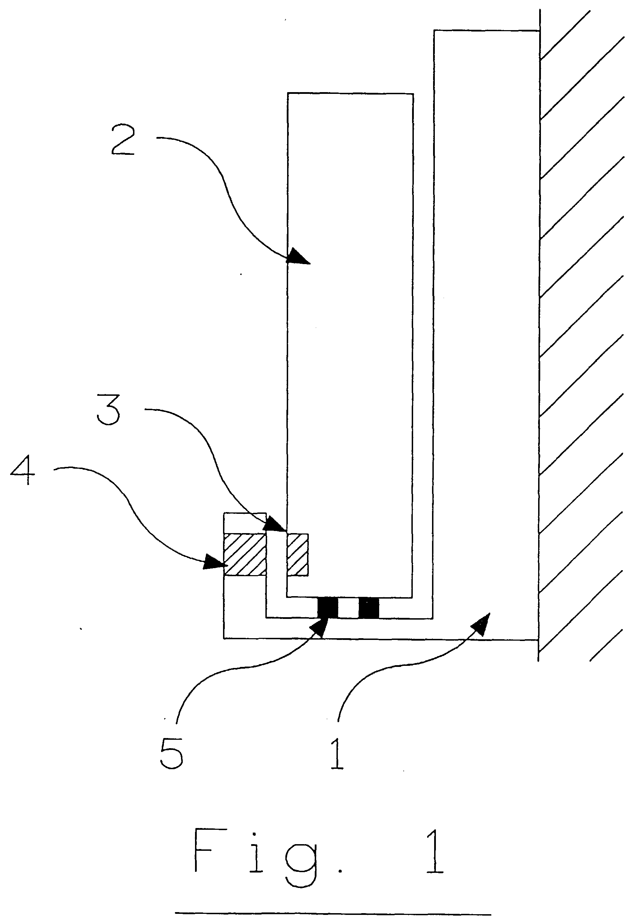

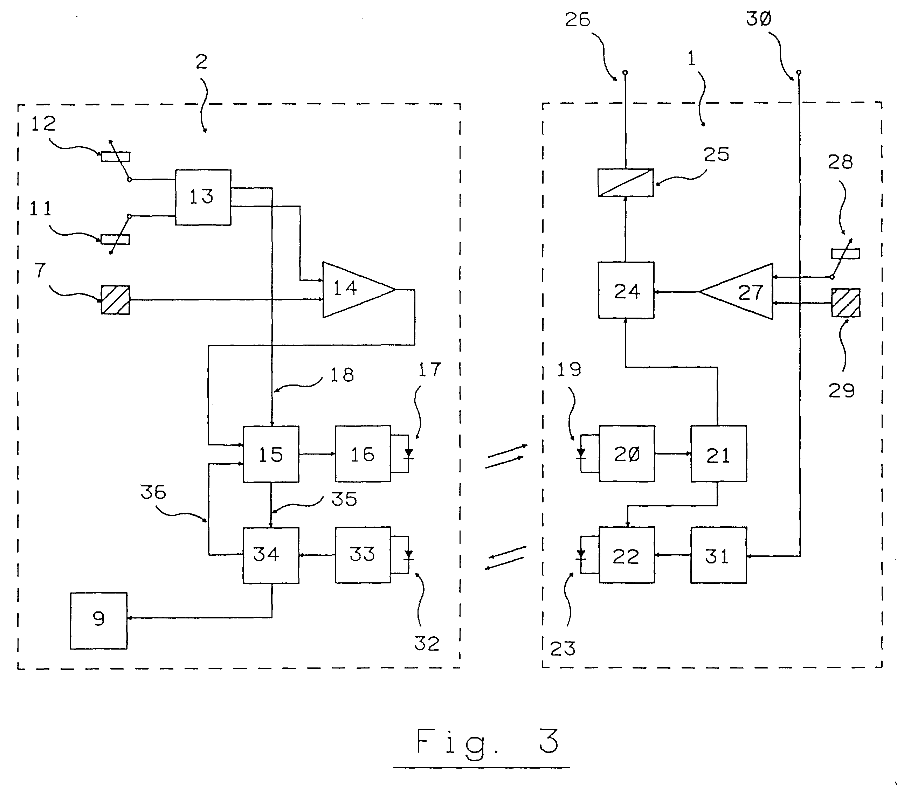

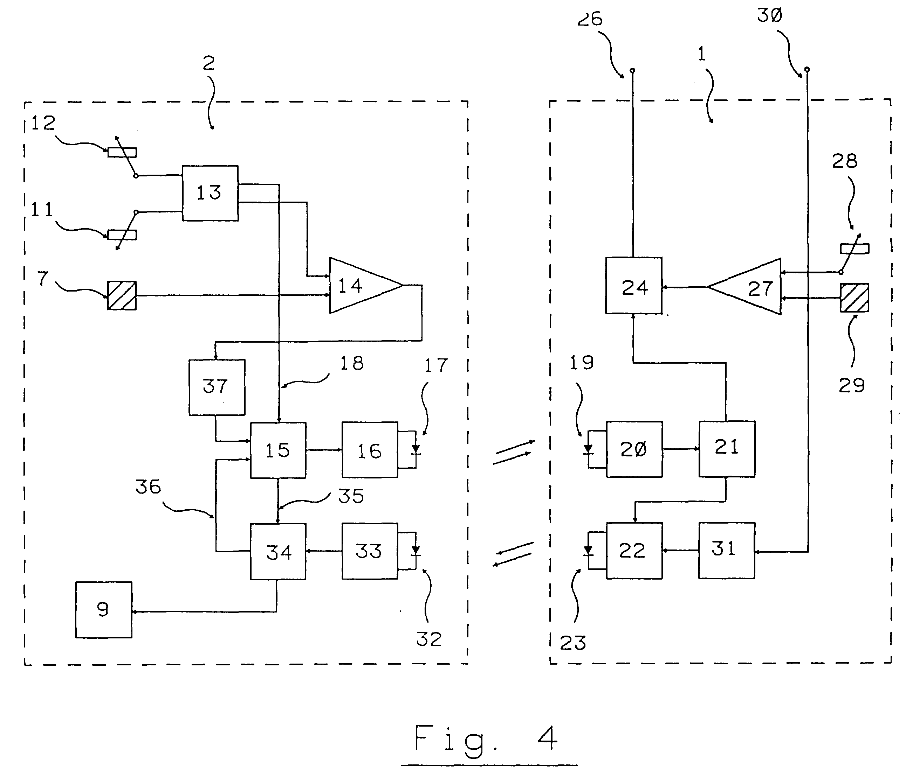

Eine in Figur 1 dargestellte Regeleinrichtung besteht im wesentlichen aus einem Wandgerät 1 und einem Raumtemperaturregler 2. Das Wandgerät 1 wie auch der Raumtemperaturregler 2 sind jeweils mit einander zugeordneten Sendern und Empfängern 3 beziehungsweise 4 ausgestattet. Die Figur zeigt den an sich mobilen Raumtemperaturregler während der Wiederaufladungsphase des Energiespeichers. Dazu sind Steckkontakte 5 vorgesehen, die den Raumtemperaturregler 2 über das Wandgerät 1 mit dem Netz verbinden. Der genaue Aufbau und die Funktionsweise der beiden Hauptbaugruppen Wandgerät 1 und Raumtemperaturregler 2 gehen aus den Beschreibungen zu den Figuren 3 und 4 weiter unten hervor.

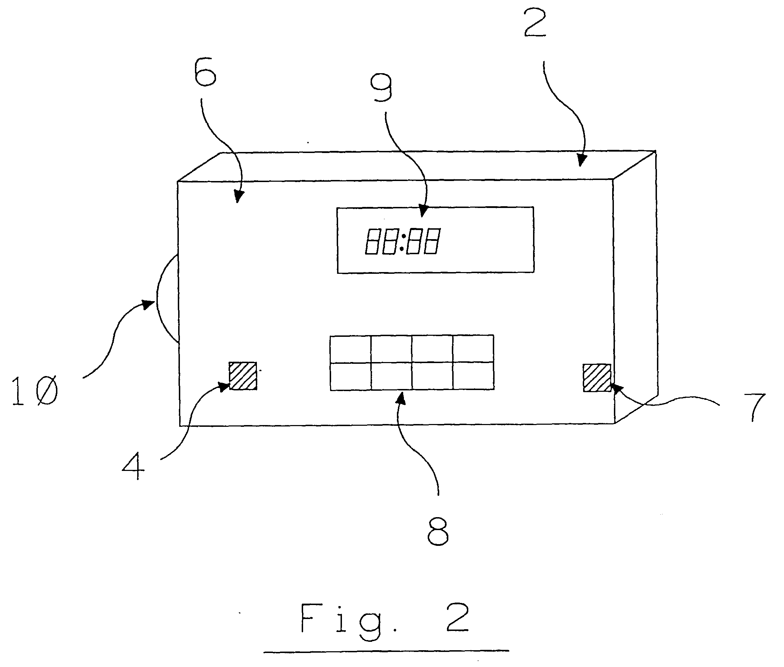

Figur 2 zeigt die Peripherieelemente des Raumtemperaturreglers in schematisch/perspektivischer Darstellung. Neben der Sender/Empfänger-Einheit 4 weist die Frontplatte 6 einen Temperaturfühler 7, ein Tastenfeld 8 zur Dateneingabe und ein Display 9 auf. Alternativ oder ergänzend zum Tastenfeld 8 kann auch mindestens ein analoges Eingabeelement 10 vorgesehen sein.

Figur 3 veranschaulicht ein Blockschaltbild der Hauptbaugruppen Wandgerät 1 und Raumtemperaturregler 2 der Regeleinrichtung. Der Raumtemperaturregler 2 ist an quasi jeden Ort positionierbar, an dem die Raumtemperatur über den Fühler 7 ermittelt und mit Hilfe der Regeleinrichtung auf einen bestimmten Soll-Wert eingestellt werden soll. Zur Vorwahl eines zyklischen, zum Beispiel täglichen, Temperaturverlaufes sind Soll-Wert-Einsteller für die Raumtemperatur 11 und für die Schaltzeiten 12, beispielsweise zur Nachtabsenkung, vorgesehen. Diese Soll-Wert-Einsteller 11 und 12 sind über eine Zeitplansteuerung 13 mit einem Komparator 14 für Soll- und Ist-Temperatur-Vergleich verbunden, dessen zweiter Eingang von dem Ausgang des Raumtemperaturfühlers 7 gebildet wird. An den Komparator 14 schließt sich die Telegrammgenerierung 15 mit nachfolgender Treiberstufe 16 für die Sendediode 17 an. Außerdem ist ein direkter Signalpfad 18 von der Zeitplansteuerung 13 zur Telegrammgenerierung 15 vorgesehen. Das von der Sendediode 17 des Raumtemperaturreglers 2 emittierte Telegramm wird von einer Empfangsdiode 19 des Wandgerätes 1 empfangen und über einen Eingangssignalverstärker 20 an eine Telegrammauswertung 21 weitergeleitet. Die Baugruppe zur Telegrammauswertung 21 ist sowohl mit einer Treiberstufe 22 für eine Sendediode 23 als auch mit einer Entscheidungsstufe 24 für die Steuerung eines Relais 25 und damit einem potentialfreien Ausgang 26 zur Heizungs- oder Heizkörperregelung oder dergleichen verbunden. Die Entscheidungsstufe 24 wird außerdem von einer Not-Temperaturregelung beaufschlagt, bestehend aus der herkömmlichen Komparator-27-/Soll-Werteinsteller-28-/Temperaturfühler-29-Baugruppe. Das Wandgerät 1 ist außerdem mit einem Eingang 30 für externe Daten beziehungsweise Daten aus dem Heizgerät versehen, welcher an eine Telegrammgenerierung 31 anliegt und hernach mit der Treiberstufe 22 für die Sendediode 23 verbunden ist. Dieser Sendediode 23 ist raumtemperaturgeräteseitig eine Empfangsdiode 32 mit nachfolgendem Eingangssignalverstärker 33 zugeordnet. Das verstärkte Eingangssignal wird einer Empfangstelegrammauswertung 34 zugeleitet, wobei zur Empfangstelegrammauswertung 34 auch ein Signalpfad 35, ausgehend von der Telegrammgenerierung 15, führt. Die Empfangstelegrammauswertung 34 dient einerseits dem Vergleich zwischen Sende- und Empfangstelegramm und andererseits der Auswertung und Dekodierung empfangener externer Daten. Diese und/oder die Vergleichsergebnisse zwischen Sende- und Empfangstelegramm werden auf dem mit der Empfangstelegrammauswertung 34 verbundenen Display 9 sichtbar gemacht. Abweichungen zwischen Sende- und Empfangstelegramm werden außerdem über einen Signalpfad 36 auf die Telegrammgenerierung 15 rückgekoppelt.

Diese Regeleinrichtung besitzt folgende Funktionsweise: Die mittels der Soll-Wert-Einsteller 11 und 12 am mobilen Raumtemperaturregler 2 eingestellten Soll-Werte für die Temperatur und deren zeitlichem Verlauf werden am Komparator 14 ständig mit der am Temperaturfühler 7 gemessenen Ist-Temperatur verglichen. Nur Abweichungen zwischen Soll- und Ist-Temperatur erzeugen am Komparator 14 ein Ausgangssignal, welches der Telegrammgenerierung 15 zugeleitet wird. Die Telegrammgenerierung 15 erzeugt ein entsprechend kodiertes Signal, welches über die Treiberstufe 16 und die Sendediode 17 auf den Empfänger 19/20 durch Infrarotübertragung weitergeleitet wird. Das empfangene Telegramm wird mittels der Baugruppe 21 ausgewertet und auf den Sender 22/23 des Wandgerätes 1 übertragen, der bei störungsfreiem Sendebetrieb das gleiche Telegramm an den Empfänger 32/33 des Raumtemperaturreglers 2 rückkoppelt. Der Sender/Empfänger-Kreislauf wird an der Empfangstelegrammauswertung 34 geschlossen. Dort erfolgt der Vergleich des ursprünglichen mit dem Feedback-Telegramm. Bei Übereinstimmung wird kein zweiter Telegrammübertragungskreislauf gestartet, so daß die Telegrammauswertung 21 des Wandgerätes 1 über eine eingebaute Zeitverzögerungsstufe die Zustandsinformation für das Relais 25 weitergibt. Die Zeitverzögerungsstufe ist auf eine Zeitkonstante eingestellt, die geringfügig über dem Zeitbedarf für einen Sendekreislauf liegt. Wurde durch die Empfangstelegrammauswertung 34 am Raumtemperaturregler 2 eine Abweichung zwischen Sende- und Empfangstelegramm festgestellt, so erfolgt über den Signalpfad 36 eine erneute Aktivierung der Telegrammgenerierung 15, und an der Telegrammauswertung 21 des Wandgerätes 1 trifft innerhalb der Verzögerungszeit ein erneutes Telegramm ein, wodurch die Zeitverzögerungsstufe zurückgesetzt wird und ein zweites Mal mit der Zeitzählung beginnt. Nach einer bestimmten Anzahl von Wiederholungen einer derartigen fehlerhaften Signalübertragung wird von der Telegrammauswertung 21 ein Impuls auf die Entscheidungsstufe 24 geleitet, wodurch diese die wandgeräteinterne Not-Temperaturregelung freigibt. Das geschieht auch, wenn eine minimale Sendefrequenz, zum Beispiel durch Abschirmung der Infrarotstrahlen, unterschritten wird. Zu diesem Zweck ist die Telegrammgenerierung 15 des Raumtemperaturreglers mit einem Zeitbaustein ausgestattet, der bewirkt, daß nach einem Zeitraum von beispielsweise 30 Minuten auch dann ein Telegramm ausgesandt wird, wenn keine Veranlassung zu einer Relaisumschaltung besteht, das heißt, wenn die zuvor registrierte Abweichung zwischen Soll- und Ist-Wert immer noch vorhanden ist beziehungsweise in diesem Zeitraum keine Abweichung oberhalb eines Schwellwertes aufgetreten ist. Die Feedback-Strecke und die Sendefrequenzkontrolle bewirken in Verbindung mit der Not-Temperaturregelung eine außerordentliche Funktionssicherheit der Regeleinrichtung bei jeder Art von Übertragungsstörungen, ohne einen unnötig hohen Energieverbrauch zu bewirken.

Eine weitere erhebliche Einsparung von Sendeenergie wird durch die vollständige Einstellung des Sendebetriebes während der Nachtabsenkungsphase erreicht. Um zu verhindern, daß in diesem Fall die Not-Temperaturregelung in Gang gesetzt wird, wird von der Zeitplansteuerung 13 mit Beginn der Nachtabsenkung über den Signalpfad 18 eine diesbezügliche Information auf die Telegrammgenerierung 15 gegeben, wo ein entsprechend kodiertes Telegramm erzeugt wird, welches über die Telegrammauswertung 21 des Wandgerätes 1 dekodiert und an die Entscheidungsstufe 24 weitergeleitet wird. Die Entscheidungsstufe 24 wird auf diesem Wege quasi für die Dauer der Nachtabsenkphase inaktiviert.

Als besonderer Komfort ist bei diesem Ausführungsbeispiel einer erfindungsgemäßen Temperaturregelung ein Eingang 30 für externe Daten vorgesehen. Das können beispielsweise Daten aus dem Heizgerät, wie Betriebsstunden, Störmeldungen und dergleichen sein. Diese Daten werden einer Telegrammgenerierung 31 zugeführt, welche ein entsprechend kodiertes Telegramm über die Feedback-Strecke zum Raumtemperaturregler überträgt. Dort wird entweder das Display 9 angesteuert oder auch über in der Figur nicht dargestellte Signalleitungen Einfluß auf die Zeitplansteuerung 13 oder die Telegrammgenerierung 15 genommen. Diese Übermittlung von externen Daten ist nur möglich aufgrund des Vorhandenseins der Feedback-Strecke, die somit nicht nur zur Überprüfung der Richtigkeit der Telegrammübermittlung dient. Am Display 9 wird natürlich auch die Einschaltung der Not-Temperaturregelung angezeigt. Diese Betriebsart ist zu vermeiden und deutet immer darauf hin, daß entweder fehlerhafte oder gar keine Informationen vom Raumtemperaturregler zum Wandgerät übermittelt werden. Über weitere Sensor- und Schaltungstechnik ist es ohne weiteres möglich, die Fehlerursache genauer zu spezifizieren und am Display 9 zur Anzeige zu bringen.

Figur 4 zeigt eine weitere Modifizierung des Blockschaltbildes gemäß Figur 3 zur Anwendung bei Stetigregelung beziehungsweise Quasi-Stetigregelung. Im Unterschied zur Figur 3 ist lediglich eine weitere Baugruppe 37 zwischen dem Komparator 14 und der Telegrammgenerierung 15 vorgesehen, welche Änderungen des Ausgangssignals des Komparators 14 in quantisierter Form und mit Vorzeichen - Erhöhung oder Verringerung der Soll-Wert/Ist-Wert-Differenz - an die Telegrammgenerierung 15 weiterleitet. Das mittels der Empfangsbaugruppe 19/20 des Wandgerätes 1 empfangene Signal steuert im Gegensatz zur Zweipunktregelung gemäß Figur 3 kein Relais, sondern ein n-stufiges Schaltelement zur Beaufschlagung beispielsweise eines Gashauptventiles bei einem Gasheizgerät an, wobei n ≥ 3 gilt. Je feiner die Quantisierung ist, das heißt, je größer n ist, desto mehr nähert sich die Regelung einer echten Stetigregelung an und desto geringer sind auch die zu erwartenden periodischen Abweichungen des Raumtemperatur-Ist-Wertes vom Raumtemperatur-Soll-Wert.

Die Erfindung beschränkt sich nicht auf das oben angegebene Ausführungsbeispiel. Vielmehr ist eine Anzahl von Varianten denkbar, welche auch bei andersartiger Ausführung von der Erfindung Gebrauch machen.

## Patentansprüche

1. Einrichtung zur Regelung der Raumtemperatur, bestehend aus einem mobilen Raumtemperaturregler und einem fest installierten Wandgerät, wobei der Raumtemperaturregler einen Temperaturfühler aufweist, der mit einer Soll-Wert beaufschlagten Komparatorschaltung verbunden ist, welche einen Sender einer drahtlosen Signalübertragungsstrecke ansteuert und wobei das Wandgerät den Empfänger der Signalübertragungsstrecke aufweist, welcher über eine Stelleinrichtung auf einen Wärmeerzeuger, ein Heizkörperventil oder dergleichen einwirkt, dadurch gekennzeichnet, daß das Wandgerät (1) in an sich bekannter Weise zusätzlich einen mit dem Empfänger (19/20) verbundenen Sender (22/23) und der Raumtemperaturregler (2) in an sich bekannter Weise zusätzlich einen mit dem Sender (16/17) verbundenen Empfänger (32/33) aufweisen, wobei das Wandgerät (1) weiterhin einen Regler mit Temperaturfühler (29), Soll-Wertgeber (28) und Komparatorschaltung (27) aufweist, welcher bei Erkennung von Signalübertragungsfehlern mittels einer Entscheidungsstufe (24) aktiviert wird.

2. Einrichtung nach Anspruch 1, dadurch gekennzeichnet, daß der Raumtemperaturregler (2) eine dem Empfänger (32/33) und einer Telegrammgenerierung (15) nachgeschaltete Empfangstelegrammauswertung (34) zur Feststellung der Übereinstimmung zwischen generiertem und empfangenem Telegramm aufweist.

3. Einrichtung nach Anspruch 2, dadurch gekennzeichnet, daß der Raumtemperaturregler (2) eine der Empfangstelegrammauswertung (34) nachgeschaltete akustische Fehlersignalisierung oder eine optische Anzeige, insbesondere ein LCD-Display (9) aufweist.

4. Einrichtung nach einem der vorangehenden Ansprüche, dadurch gekennzeichnet, daß der Sender (22/23) des Wandgerätes (1) mit einer Telegrammgenerierung (31) zur Übertragung externer Daten zum Raumtemperaturregler (2) verbunden ist.

5. Einrichtung nach einem der vorangehenden Ansprüche, dadurch gekennzeichnet, daß dem Empfänger (19/20) des Wandgerätes (1) eine Telegrammauswertung (21) nachgeschaltet ist, welche mit dem Sender (22/23) des Wandgerätes (1) verbunden ist und eine Zeitverzögerungsstufe aufweist, an welcher die Stelleinrichtung anschließt.

6. Einrichtung nach einem der vorangehenden Ansprüche, dadurch gekennzeichnet, daß die Stelleinrichtung Zweipunktcharakteristik aufweist.

7. Einrichtung nach Anspruch 6, dadurch gekennzeichnet, daß die Stelleinrichtung als Relaisschaltung (25) ausgebildet ist.

8. Einrichtung nach einem der Ansprüche 1 bis 5, dadurch gekennzeichnet, daß die Stelleinrichtung Quasi-Stetigcharakteristik, das heißt, n Schaltstellungen mit n ≥ 3 aufweist.

9. Einrichtung nach einem der vorangehenden Ansprüche, dadurch gekennzeichnet, daß Sender (16/17 und 22/23) und Empfänger (32/33 und 19/20) als Infrarot-Sender und -Empfänger ausgebildet sind.

10. Einrichtung nach einem der Ansprüche 1 bis 8, dadurch gekennzeichnet, daß Sender (16/17 und 22/23) und Empfänger (32/33 und 19/20) als Funk-Sender und -Empfänger ausgebildet sind.

11. Einrichtung nach einem der vorangehenden Ansprüche, dadurch gekennzeichnet, daß der Raumtemperaturregler (2) batteriebetrieben ausgebildet ist.

12. Einrichtung nach einem der Ansprüche 1 bis 10, dadurch gekennzeichnet, daß der Raumtemperaturregler (2) akkumulatorbetrieben ausgebildet ist, wobei zur Aufladung des Akkumulators/Akkumulatoren über Steckkontakte (5) am Wandgerät (1) eine Netzverbindung vorgesehen ist.

13. Einrichtung nach einem der vorangehenden Ansprüche, dadurch gekennzeichnet, daß der Raumtemperaturregler (2) eine Zeitplansteuerung (13) für den gewünschten Temperaturverlauf aufweist, welche zur Einleitung und Beendigung von Sendepausen, beispielsweise während einer Nachtabsenkphase, über einen Signalpfad (18) mit der Telegrammgenerierung (15) verbunden ist.

14. Einrichtung nach einem der vorangehenden Ansprüche, dadurch gekennzeichnet, daß die Telegrammgenerierung (15) des Raumtemperaturreglers (2) eine zeitsynchrone Zähleinrichtung (Zeitfenster, Defaultzeit) aufweist, die bei jeder Telegrammgenerierung aktiviert wird und bei einem bestimmten, zum Beispiel 30 Minuten entsprechenden, Zählstand eine gleichartige Telegrammgenerierung auslöst.

15. Einrichtung nach den Ansprüchen 13 und 14, dadurch gekennzeichnet, daß Mittel vorgesehen sind, die die Zähleinrichtung zur Einleitung beziehungsweise Beendigung einer Sendepause über den Signalpfad (18) aus- beziehungsweise einschalten.

16. Verfahren zur Verwendung einer Einrichtung zur Regelung der Raumtemperatur, bestehend aus einem mobilen Raumtemperaturregler und einem fest installierten Wandgerät, wobei der Raumtemperaturregler einen Temperaturfühler aufweist, der mit einer Soll-Wert beaufschlagten Komparatorschaltung verbunden ist, welche einen Sender einer drahtlosen Signalübertragungsstrecke ansteuert und wobei das Wandgerät den Empfänger der Signalübertragungsstrecke aufweist, welcher über eine Stelleinrichtung auf einen Wärmeerzeuger, ein Heizkörperventil oder dergleichen einwirkt, nach einem der vorangehenden Ansprüche, dadurch gekennzeichnet, daß der Sender (16/17) des Raumtemperaturreglers (2) nur aktiviert wird, wenn eine Mindestdifferenz zwischen Soll- und Ist-Temperatur überschritten wird oder wenn während eines festen Zeitraumes (Zeitfenster, Defaultzeit), zum Beispiel 30 Minuten, keine Überschreitung der Mindestdifferenz aufgetreten ist.

## Claims

1. Arrangement for the control of ambient temperature consisting of a mobile room temperature controller and a stationary wall-mounted unit, with the room temperature controller comprising a temperature sensor linked with a comparator circuit with setpoint input, such comparator circuit activating a transmitter of a radio signal transmission link, and with the wall-mounted unit comprising the receiver of such radio signal transmission link, which in turn, via an actuating device, acts upon a heat generating apparatus, a heating radiator valve or the like, **characterized in that** the wall-mounted unit (1), in a manner generally known to the art, additionally includes a transmitter (22/23) linked with the receiver (19/20), and the room temperature controller (2), in a manner generally known to the art, additionally includes a receiver (32/33) linked with the transmitter (16/17), and that the wall-mounted unit (1) further comprises a controller with a temperature sensor (29), a setpoint setting device (28) and a comparator circuit (27), which is activated by means of a decision circuit (24) when a signal transmission error is recognized.

2. Arrangement as claimed in Claim 1, **characterized in that** the room temperature controller (2) comprises a receive message evaluator (34) provided downstream of the receiver (32/33) and of a message generator (15), which serves to verify conformance between the message generated and the message received.

3. Arrangement as claimed in Claim 2, **characterized in that** the room temperature controller (2) comprises an audible error signalling device or an optical display, in particular an LCD display (9), provided downstream of the said receive message evaluator (34).

4. Arrangement as claimed in any of the preceding claims, **characterized in that** the transmitter (22/23) of the wall-mounted unit (1) is linked with a message generator (31) for the transmission of external data to the room temperature controller (2).

5. Arrangement as claimed in any of the preceding claims, **characterized in that** a message evaluator (21) is provided downstream of the transmitter (19/20) of the wall-mounted unit (1), which in tum is linked with the transmitter (22/23) of the wall-mounted unit (1) and comprises a time delay element followed by the actuating device.

6. Arrangement as claimed in any of the preceding claims, **characterized in that** the actuating device is of the two-level type.

7. Arrangement as claimed in Claim 6, **characterized in that** the actuating device is designed as a relay circuit (25).

8. Arrangement as claimed in any of the Claims 1 to 5, **characterized in that** the actuating device is of the quasi-continuous-action type, i.e. has n switching positions with n ≥ 3.

9. Arrangement as claimed in any of the preceding claims, **characterized in that** the transmitters (16/17 and 22/23) and receivers (32/33 and 19/20) are infrared transmitters and receivers.

10. Arrangement as claimed in any of the Claims 1 to 8, **characterized in that** the transmitters (16/17 and 22/23) and receivers (32/33 and 19/20) are radio transmitters and receivers.

11. Arrangement as claimed in any of the preceding claims, **characterized in that** the room temperature controller (2) is battery-powered.

12. Arrangement as claimed in any of the Claims 1 to 10, **characterized in that** the room temperature controller (2) is accumulator-powered and the wall-mounted unit (1) comprises plug-in contacts (5) for connection to mains supply for the purpose of recharging the accumulator(s).

13. Arrangement as claimed in any of the preceding claims, **characterized in that** the temperature controller (2) comprises a time-program controller (13) for the desired temperature schedule, which via a signal track (18) is linked with the message generator (15) for initiating and terminating no-transmission periods, for example during a reduced-temperature phase at night.

14. Arrangement as claimed in any of the preceding claims, **characterized in that** the message generator (15) of the room temperature controller (2) comprises a time-synchronous counting device (time window, default time) which is activated whenever a message is generated and which initiates a like message generation at a certain counter reading, for example 30 minutes.

15. Arrangement as claimed in Claims 13 and 14, **characterized in that** means are provided for switching the counting device off and on via the signal track (18) for initiating or terminating a no-transmission period.

16. Process for the use of an arrangement for controlling ambient temperature, consisting of a mobile room temperature controller and a stationary wall-mounted unit, with the room temperature controller comprising a temperature sensor linked with a comparator circuit with setpoint input, such comparator circuit activating a transmitter of a radio signal transmission link, and with the wall-mounted unit comprising the receiver of such radio signal transmission link, which in turn, via an actuating device, acts upon a heat generating apparatus, a heating radiator valve or the like, as claimed in any of the preceding claims, **charac** **terized in that** the transmitter (16/17) of the room temperature controller (2) is only activated if a minimum difference between the setpoint temperature and the actual temperature is exceeded or if, during a fixed period of time (time window, default time), for example 30 minutes, such minimum difference has not been exceeded.

## Revendications

1. Equipement pour la régulation de la température d'intérieurs, comprenant un régulateur de température mobile et un appareil mural fixe, le régulateur de température étant doté d'une sonde thermométrique reliée à un circuit comparateur à valeur nominale lequel agit sur un émetteur d'un circuit de transmission de signaux sans fil, et l'appareil mural comprenant le récepteur dudit circuit de transmission, qui agit sur un générateur de chaleur, un robinet thermostatique ou similaire par l'intermédiaire d'un organe d'exécution, équipement caractérisé par le fait que l'appareil mural (1) est équipé de plus, de façon connue, d'un émetteur (22/23) relié au récepteur (19/20), et que le régulateur de température (2) est équipé de plus, de façon connue, d'un récepteur (32/33) relié à l'émetteur (16/17), l'appareil mural (1) comprenant de plus un régulateur avec sonde thermométrique (29), générateur de signaux de consigne (28) et circuit comparateur (27), régulateur activé en présence d'erreurs dans la transmission des signaux, à l'aide d'un étage logique (24).

2. Equipement suivant la revendication 1, caractérisé par le fait que le régulateur de température (2) comprend un récepteur-analyseur de messages (34) en aval du récepteur (32/33) et d'un générateur de messages (15) pour contrôler la conformité des messages générés et reçus.

3. Equipement suivant la revendication 2, caractérisé par le fait que le régulateur de température (2) comprend un émetteur de signaux d'erreur acoustiques ou un visualisateur, notamment un visualisateur LCD (9), en aval du récepteur-analyseur de messages (34).

4. Equipement suivant l'une des revendications précédentes, caractérisé par le fait que l'émetteur (22/23) de l'appareil mural (1) est relié à un générateur de messages (31) pour la transmission de données externes au régulateur de température (2).

5. Equipement suivant l'une des revendications précédentes, caractérisé par le fait que le récepteur (19/20) de l'appareil mural (1) est suivi d'un analyseur de messages (21) relié à l'émetteur (22/23) de l'appareil mural (1) et comprenant un étage temporisateur auquel est relié l'organe d'exécution.

6. Equipement suivant l'une des revendications précédentes, caractérisé par le fait que l'organe d'exécution fonctionne en tout ou rien.

7. Equipement suivant la revendication 6, caractérisé par le fait que l'organe d'exécution est conçu comme montage relais (25).

8. Equipement suivant l'une des revendications 1 à 5, caractérisé par le fait que l'organe d'exécution a une caractéristique de quasi-continuité, c'est-à-dire que n positions valent n ≥ 3.

9. Equipement suivant l'une des revendications précédentes, caractérisé par le fait que les émetteurs (16/17 et 22/23) et les récepteurs (32/33 et 19/20) sont des appareils à infrarouge.

10. Equipement suivant l'une des revendications 1 à 8, caractérisé par le fait que les émetteurs (16/17 et 22/23) et les récepteurs (32/33 et 19/20) sont des appareils radioélectriques.

11. Equipement suivant l'une des revendications précédentes, caractérisé par le fait que le régulateur de température (2) fonctionne sur piles.

12. Equipement suivant l'une des revendications 1 à 10, caractérisé par le fait que le régulateur de température (2) fonctionne sur accumulateurs, des contacts à fiches (5) sur l'appareil mural (1) étant prévus pour la recharge des accumulateurs par le secteur.

13. Equipement suivant l'une des revendications précédentes, caractérisé par le fait que le régulateur de température (2) comporte un régulateur de temps (13) déterminant le régime des températures en commandant et arrêtant des pauses, par exemple au cours d'un chauffage de nuit à allure réduite, régulateur relié par une ligne (18) au générateur de messages (15).

14. Equipement suivant l'une des revendications précédentes, caractérisé par le fait que le générateur de messages (15) du régulateur de température (2) comprend un compteur en synchronisme avec le temps (chronométrage limité, temps en défaut), activé à chaque génération de messages et qui déclenche, dans une position déterminée correspondant par exemple à 30 minutes, une génération de messages du même genre.

15. Equipement suivant les revendications 13 et 14, caractérisé par le fait qu'il est prévu des moyens qui mettent hors ou en circuit le compteur pour commencer ou terminer une pause d'émission, par la ligne (18).

16. Procédé pour l'utilisation d'un équipement pour la régulation de la température d'intérieurs comprenant un régulateur de température mobile et un appareil mural fixe, le régulateur de température étant doté d'une sonde thermométrique reliée à un circuit comparateur à valeur nominale lequel agit sur un émetteur d'un circuit de transmission de signaux sans fil, et l'appareil mural comprenant le récepteur dudit circuit de transmission, qui agit sur un générateur de chaleur, un robinet thermostatique ou similaire par l'intermédiaire d'un organe d'exécution, suivant l'une des revendications précédentes, procédé caractérisé par le fait que l'émetteur (16/17) du régulateur de température (2) n'est activé qu'au moment où une différence minimale entre la température de consigne et la température effective est dépassée ou que pendant un délai fixe (chronométrage limité, temps en défaut) par exemple 30 minutes, la différence minimale n'a pas été dépassée.
